Europäisches Patentamt

European Patent Office

Office européen des brevets

(19)

(11) Numéro de publication : **0 145 604
B1**

(12) **FASCICULE DE BREVET EUROPÉEN**

(45) Date de publication du fascicule du brevet :
27.07.88

(51) Int. Cl.⁴ : **C 03 C 27/04, C 03 C 15/00,
C 04 B 37/02, H 05 B 3/26**

(21) Numéro de dépôt : **84402548.6**

(22) Date de dépôt : **11.12.84**

(54) **Procédé pour braser un élément de connexion électrique au conducteur d'alimentation de courant d'un vitrage chauffant.**

(30) Priorité : **13.12.83 DE 3344958**

(43) Date de publication de la demande :
**19.06.85 Bulletin 85/25**

(45) Mention de la délivrance du brevet :
**27.07.88 Bulletin 88/30**

(84) Etats contractants désignés :
**BE DE FR GB IT SE**

(56) Documents cités :
**EP-A- 0 070 771
FR-A- 2 212 302
CHEMICAL ABSTRACTS, vol. 97, no. 26, 27 décembre
1982, page 353, abrégé 221670y, Columbus, Ohio, US;
& JP - A - 82 111 261 (FUJITSU LTD.) 10-07-1982**

(73) Titulaire : **SAINT-GOBAIN VITRAGE
Les Miroirs 18, avenue d'Alsace
F-92400 Courbevoie (FR)
BE FR GB IT SE
VEGLA Vereinigte Glaswerke GmbH
Viktoriaallee 3-5
D-5100 Aachen (DE)
DE**

(72) Inventeur : **Karla, M. Heinz
Albert-Steiner Strasse 9
D-5120 Herzogenrath (DE)**

(74) Mandataire : **Muller, René
SAINT-GOBAIN RECHERCHE 39, quai Lucien Lefranc
F-93304 Aubervilliers (FR)**

EP 0 145 604 B1

## Description

La présente invention concerne un procédé pour braser la semelle d'un élément de connexion électrique à une couche du genre émail conductrice électrique cuite sur une surface de verre, en particulier au conducteur d'alimentation de courant d'un vitrage chauffant électrique, suivant lequel une autre couche du genre émail opaque cuite est disposée sur la surface du verre en dessous du conducteur d'alimentation de courant.

On sait que le brasage d'éléments de connexion électrique sur les conducteurs d'alimentation de courant d'un vitrage chauffant électrique suscite des difficultés lorsqu'entre le conducteur d'alimentation de courant et la surface en verre est disposée une autre couche du genre émail, faite en particulier d'un émail non transparent. Pour éviter ces difficultés, il est connu, comme décrit dans le document EP-OS 00.70.771, de prévoir une fenêtre à l'intérieur de la couche non transparente disposée en dessous du conducteur d'alimentation de courant et en dessous de l'élément de connexion électrique, de sorte que, lors de l'impression de la couche conductrice électrique disposée sur cette couche non transparente, la pâte à imprimer traverse la fenêtre en cet endroit et l'émail conducteur électrique, en fondant, s'unit directement à la surface du verre.

Ces fenêtres ménagées dans la couche non transparente sont visibles de l'extérieur dans le cas de vitrages chauffants montés dans des véhicules automobiles auxquels de tels vitrages chauffants sont destinés en premier lieu et ont un effet optiquement gênant.

L'invention a pour but de procurer un procédé au moyen duquel l'aptitude au brasage de la couche conductrice cuite, à l'endroit prévu pour le brasage à la semelle de l'élément de connexion électrique, fait l'objet d'un traitement au moyen d'un agent caustique fluoré.

Dans une réalisation avantageuse du procédé, on utilise à titre d'agents caustiques fluorés, des solutions aqueuses de fluorures acides et plus particulièrement d'hydrogénofluorures de métaux alcalins et d'hydrogénofluorure d'ammonium.

Lors de l'application du procédé conforme à l'invention, la phase de verre à la surface de la couche conductrice électrique cuite est dissoute superficiellement par l'agent caustique fluoré. Les particules de la phase métallique, constituée en règle générale par de l'argent, sont de cette façon libérées Il semble qu'il se forme en effet pendant le traitement thermique de fusion et de cuisson des pâtes céramiques appliquées par un procédé de sérigraphie sur la surface de la couche supérieure, c'est-à-dire la couche conductrice électrique, un revêtement fait d'une phase vitreuse qui rend l'opération de brasage plus difficile. Cette phase vitreuse est probablement formée par le fait que des flux fondant à basse température diffusent à partir de la phase de verre dans la couche disposée en dessous de la couche à braser jusque dans la couche conductrice électrique, de sorte que la composition de la couche à braser se modifie. Dans cette couche, la fraction de phase de verre fondant à basse température s'accroît de ce fait, de sorte que les particules métalliques libres nécessaires pour l'imprégnation par la brasure tendre, sont complètement ou partiellement enrobées par la phase de verre. Lorsque la surface à braser est traitée conformément à l'invention, l'aptitude au brasage de la fritte cuite conductrice électrique est entièrement rétablie.

L'invention sera décrite ci-après plus en détail à titre d'exemple avec référence au dessin annexé, dans lequel :

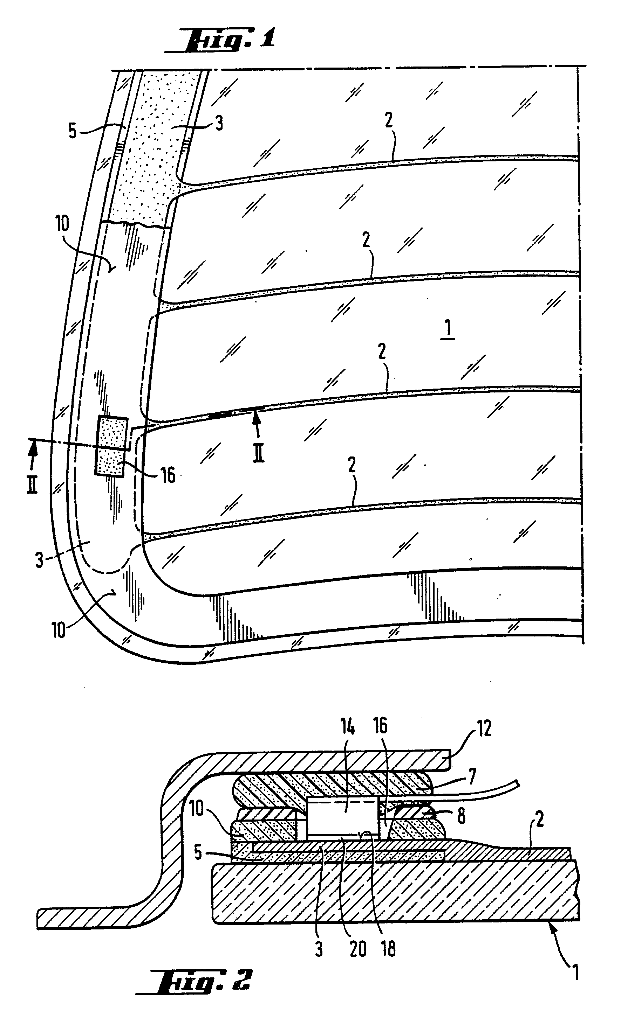

la Fig. 1 est une vue en élévation fragmentaire d'une lunette arrière chauffante électrique pour véhicule automobile, et

la Fig. 2 est une vue en coupe suivant la ligne II-II de la lunette arrière chauffante représentée sur la Fig. 1 dans un état monté dans la carrosserie d'une automobile.

Les vitrages chauffants électriques s'utilisent en premier lieu comme lunettes arrière dans des véhicules automobiles. Les conducteurs chauffants 2 sont disposés sur la surface du vitrage tournée vers l'intérieur de l'habitacle sous la forme de bandes étroites d'une largeur d'environ 0,4 à 1,2 mm. Les conducteurs chauffants 2 se raccordent à leurs extrémités à des conducteurs collecteurs ou d'alimentation de courant 3 relativement larges. Après montage du vitrage, les conducteurs chauffants 2 sont habituellement disposés horizontalement et les conducteurs d'alimentation de courant 3 sont disposés le long des deux côtés essentiellement verticaux.

En dessous du conducteur d'alimentation de courant 3 est prévue, directement sur la surface du vitrage 1, une couche 5 d'un émail opaque. Cette couche 5 est en général appliquée sous la forme d'un encadrement sur toute la périphérie du vitrage 1. Une telle couche 5 formant encadrement est en général prévue lorsque les vitrages doivent être collés aux châssis de fenêtre de la carrosserie de l'automobile. Elle sert dans ce cas à rendre opaque la zone de collage du vitrage et à conférer un aspect uniformément net au bord du vitrage. Des peintures céramiques à cuire, qui conviennent pour la formation de cette couche en forme d'encadrement 5 sont disponibles dans le commerce. On utilise de préférence à cet effet des peintures céramiques à cuire de teinte noire.

Etant donné que les conducteurs d'alimentation de courant 3 formés de la couche du genre émail conductrice électrique ne sont en règle générale pas compatibles avec l'adhésif 7 utilisé ou avec la couche de fond 8 à appliquer avant l'adhésif 7, mais sont attaqués par ces produits et qu'une adhérence optimale n'est pas obtenue entre la couche d'adhésif 7 et les conducteurs d'alimentation de courant 3, une couche de protection ou d'adhérence 10 est prévue sur les conducteurs d'alimentation de courant 3 en coïncidence avec la couche opaque 5 et cette couche 10 est également faite d'une matière céramique cuite et présente la même composition que la couche 5 formant encadrement.

Dans l'état monté, le vitrage 1 est relié par l'intermédiaire de la couche d'adhésif 7 au rebord 12 du châssis de fenêtre de la carrosserie d'automobile.

Pour pouvoir lors de la préparation du vitrage, amener l'élément de connexion électrique 14 en contact avec le conducteur d'alimentation de courant 3, un évidement ou une fenêtre 16 est prévu dans la couche de protection 10 à l'endroit où l'élément de connexion électrique 14 doit être fixé sur le conducteur d'alimentation de courant 3. On tient compte de la disposition de la fenêtre 16 lors de l'impression de la couche 10 par sérigraphie de telle façon que ces endroits restent exempts de pâte céramique d'impression.

La dernière opération lors de la fabrication de tels vitrages chauffants, après la cuisson des diverses couches, est formée par l'opération de brasage par laquelle l'élément de connexion électrique 14 est brasé en place. Avant le brasage de la semelle 20 de l'élément de connexion électrique 14 sur la surface 18 du conducteur d'alimentation de courant 3, la surface 18 est traitée au moyen d'une solution caustique fluorée. A titre de solution caustique, on applique une solution à environ 10 % d'hydrogénofluorure d'ammonium dans de l'eau en une couche mince sur la surface 18, par exemple à l'aide d'un tampon imprégné de cette solution. Après un bref temps d'action de quelques secondes, la surface 18 est attaquée au point que sans autre traitement et sans que cette surface 18 doive être débarrassée de la solution et des produits de réaction, la surface 18 du conducteur d'alimentation de courant 3 est complètement imprégnée de la brasure fondue. La surface ainsi traitée convient pour le brasage de la même manière et avec les mêmes résultats qu'un conducteur d'alimentation de courant 3 de la même composition, qui est appliqué tel quel directement sur la surface de verre.

L'invention a été décrite avec référence à un vitrage d'automobile chauffant, mais elle peut bien entendu aussi être utilisée pour d'autres vitrages pour lesquels sont coulés sur la surface du verre des conducteurs électriques faits de frittes conductrices électriques, c'est-à-dire de compositions qui contiennent un constituant de verre fondant à basse température et un constituant métallique, et pour lesquelles une autre couche du genre émail est disposée en dessous de l'endroit de brasage du conducteur. Il peut en être ainsi, par exemple, aussi dans le cas de vitrages d'automobile comportant des conducteurs d'antenne cuits en place lorsque le point de connexion de l'antenne est disposé derrière l'encadrement imprimé fait d'une peinture à cuire.

**Revendications**

1. Procédé pour braser un élément de connexion électrique à une couche du genre émail conductrice électrique cuite sur une surface de verre, en particulier au conducteur d'alimentation de courant d'un vitrage d'automobile chauffant électrique, suivant lequel une autre couche du genre émail opaque cuite, est disposée sur la surface du verre en dessous du conducteur d'alimentation de courant, caractérisé en ce que la surface (18) de la couche du genre émail conductrice électrique (3) est traitée au moyen d'un agent caustique fluoré à l'endroit prévu pour le brasage à la semelle (20) de l'élément de connexion électrique (14).

2. Procédé suivant la revendication 1, caractérisé en ce qu'à titre d'agent caùstique fluoré, on utilise la solution aqueuse d'un fluorure acide.

3. Procédé suivant la revendication 2, caractérisé en ce qu'à titre d'agent caustique fluoré, on utilise la solution aqueuse d'un hydrogénofluorure de métal alcalin ou d'hydrogénofluorure d'ammonium.

4. Procédé suivant la revendication 3, caractérisé en ce qu'on utilise une solution aqueuse à environ 10 % d'hydrogénofluorure d'ammonium.

5. Procédé suivant l'une quelconque des revendications 1 à 4, caractérisé en ce qu'on applique la solution d'agent caustique a l'aide d'un outil d'impression du genre tampon imprégné ou imbibé d'agent caustique.

**Claims**

1. A method of brazing an electrical connecting element to a layer of the electrically conducting enamel type fired on to a glass surface, in particular to a conductor for feed of current in an electrically heated automobile window, in which another layer of the fired opaque enamel type is provided on the glass surface under the current feed conductor, characterised in that the surface (18) of the layer of the electrically conducting enamel type (3) is treated with a fluoride etching agent at the location provided for brazing to the base (20) of the electrical connecting element (14).

2. A method according to claim 1, characterised in that an aqueous solution of hydrofluoric acid is used as the fluoride etching agent.

3. A method according to claim 2, characterised in that an aqueous solution of an alkaline metal hydrogen fluoride or ammonium hydrogen fluoride is used as the fluoride etching agent.

4. A method according to claim 3, characterised in that an approximately 10 % aqueous solution of ammonium hydrogen fluoride is used.

5. A method according to any one of claims 1 to 4, characterised in that the solution of etching agent is applied using a pressing tool of the pad type impregnated or soaked with the etching agent.

**Patentansprüche**

1. Verfahren zum Verlöten eines Stromanschlußelementes mit einer auf einer Glasoberfläche eingebrannten elektrisch leitenden emailartigen Schicht, insbesondere mit dem Stromzuführungsleiter einer elektrisch beheizbaren Autoglasscheibe, bei der eine weitere emailartige opake eingebrannte Schicht auf der Glasoberfläche unter dem Stromzuführungsleiter angeordnet ist, dadurch gekennzeichnet, daß die Oberfläche (18) der elektrisch leitenden emailartigen Schicht (3) an der für die Verlötung mit dem Fuß (20) des Stromanschlußelementes (14) vorgesehenen Stelle mit einem fluorhaltigen Ätzmittel behandelt wird.

2. Verfahren nach Anspruch 1, dadurch gekennzeichnet, daß als fluorhaltiges Ätzmittel die wässrige Lösung eines sauren Fluorids verwendet wird.

3. Verfahren nach Anspruch 2, dadurch gekennzeichnet, daß als fluorhaltiges Ätzmittel die wässrige Lösung eines Alkalihydrogenfluorids oder von Ammoniumhydrogenfluorid verwendet wird.

4. Verfahren nach Anspruch 3, dadurch gekennzeichnet, daß eine etwa 10 %ige wässerige Lösung von Ammoniumhydrogenfluorid verwendet wird.

5. Verfahren nach einem der Ansprüche 1 bis 4, dadurch gekennzeichnet, daß die Ätzlösung mit einem stempelartigen, mit dem Ätzmittel benetzten oder getränkten Druckwerkzeug aufgetragen wird.

*Fig. 1*

*Fig. 2*